# EUROPÄISCHE PATENTSCHRIFT

(11) **EP 1 413 490 B1**
(45) Veröffentlichungstag und Bekanntmachung des Hinweises auf die Patenterteilung: **07.02.2007**
(21) Anmeldenummer: 03012393.9
(22) Anmeldetag: 30.05.2003
(51) Int. Cl.: B60S 1/08

(54) **Sensoreinrichtung sowie Montageverfahren für eine Sensoreinrichtung**
Sensor device and mounting method for a sensor device
Dispositif de détection ainsi que méthode de montage pour un dispositif de détection

(30) Priorität: 22.10.2002 DE 10249158
(43) Veröffentlichungstag der Anmeldung: 28.04.2004
(73) Patentinhaber: ROBERT BOSCH GMBH, 70442 Stuttgart (DE)
(72) Erfinder: Schmitt, Patrick, 77839 Lichtenau (DE); Hog, Norbert, 77815 Buehl (DE); Hodapp, Bruno, 77855 Achern-Oensbach (DE); Pientka, Rainer, 77871 Renchen (DE); Meier, Hans, 77833 Ottersweier (DE); Blitzke, Henry, 77815 Buehl (DE); Schneider, Andreas, 77833 Ottersweier (DE); Neubauer, Mario, 76473 Iffezheim (DE); Burkart, Manfred, 76473 Iffezheim (DE); Nonnenmacher, Pierre, 67500 Niderschaeffolsheim (FR)

(56) Entgegenhaltungen:
- EP-A- 0 803 414
- DE-A- 19 701 258
- DE-A- 19 830 120

## Beschreibung

Die vorliegende Erfindung betrifft eine Sensoreinrichtung, insbesondere einen Regensensor, gemäß dem Oberbegriff des Patentanspruches 1 sowie ein entsprechendes Montageverfahren.

Eine derartige Sensoreinrichtung ist bekannt aus der DE 197 20 874 C2, wobei auf der Fahrzeugscheibe durch eine optische Klebeverbindung mittels Folienabschnittes ein Strahlenleitkörper befestigt ist. Der Folienabschnitt und der Strahlenkörper weisen an der gemeinsamen Grenzfläche jeweils eine entsprechende Profilierung auf.

Bekannt ist weiterhin aus der DE 100 60 964 A1 ein Regensensor für ein Kraftfahrzeug mit einem Lichtleitkörper, über den der Regensensor über ein Koppelelement an die Scheibe geklebt ist. Wenn die an der Scheibe ankoppelbare Oberfläche des Lichtleitköpers eine leichte konvexe Wölbung aufweist, werden Luftblasen vermieden, die sich beim Ankoppeln des Lichtleitkörpers an die Scheibe im Kopplungsbereich bilden können.

Aus der DE 100 19 112 A1 ist ein Regensensor zur Detektion von Feuchtigkeitstropfen bekannt. Der Regensensor ist mittels einer Klebeschicht, die vorzugsweise aus Silikon besteht, auf der Innenseite der Scheibe befestigt. Die Klebeschicht hat zum einen eine Befestigungsfunktion, dient also dazu, den Regensensor sicher an der Scheibe zu befestigen. Zum anderen hat sie eine Ausgleichsfunktion, dient also dazu, Unebenheiten der Scheibe oder des Regensensors auszugleichen und den Regensensor ohne Lufteinschlüsse auf der Scheibe anzuordnen. Die Klebeschicht weist etwa denselben Brechungsindex auf wie die Scheibe. Die optischen Sendeelemente senden optische Strahlen aus, die durch die Klebeschicht verlaufen und den Übergang Klebeschicht/Scheibe nahezu ungebrochen passieren.

Bekannt ist also allgemein, dass Regensensoren an die Scheibe angekoppelt werden. Das Koppelmedium besitzt dabei entweder Ballonform und wird durch Druck an die Scheibe gepresst oder das Koppelmedium - ein beidseitig glattes Klebeband - wird unter Unterdruck an die Scheibe geklebt. Beides geschieht zur Vermeidung von im optischen System und unter Designgesichtspunkten störenden Luftblasen.

Erfindungsgemäß ist eine Sensoreinrichtung mit den Merkmalen des Patentanspruches 1 und ein Montageverfahren nach Patentanspruch 8 bereitgestellt. Ein Vorteil der Sensoreinrichtung besteht darin, dass die Luftblasen kontrolliert in Bereichen entstehen, die für die Funktion zumindest weniger kritisch sind, z.B. außerhalb des optischen Weges bei groben Strukturen bzw. bei feinen Lichtwegen. Zudem wird durch die definierte Position und Form der Lufteinschlüsse eine für das Design akzeptable Anmutung erzeugt. Erfindungsgemäß kann darauf verzichtet werden, eine 3-D-Oberflächenstruktur aufwendig in der Scheibe zu erzeugen.

Vorteilhafter Weise kann eine Strukturgröße der 3-D-Oberflächenstruktur etwa 10⁻² bis 10⁻⁶ m, insbesondere 10⁻³ bis 10⁻⁵ m betragen. Bei zu großen Strukturgrößen kann es zu ungewollten Luftblasen an der Grenzfläche zwischen dem Koppelmedium und der Scheibe kommen. Bei zu kleinen Strukturgrößen kommt diese in die Größenordnung der Rauhigkeit der Scheibe, wodurch eine Undefinierte Ankoppelfläche gebildet wird.

Um eine ausreichende Stabilität der Struktur sicherstellen zu können, ist vorgesehen, dass ein Verhältnis von Breite zu Höhe der Erhöhungen der 3-D-Oberflächenstruktur etwa 3 bis 20, insbesondere um 10 beträgt.

Durch das erfindungsgemäße Montageverfahren können die hohen Kosten und der komplizierte Montageprozess mit der Unterdruckklebung bzw. der aufwendige Aufbau mit Federkonstruktion und Halteplatte deutlich vereinfacht oder vermieden werden; es ist eine einfach zu handhabende, kostengünstige und schnelle Alternative der Befestigung der Sensoreinrichtung bereitgestellt. Die Montage des Koppelmediums kann zunächst blasenfrei am Lichtleiter erfolgen und entsprechendes gilt aufgrund der 3-D-Oberflächenstruktur für die nachfolgende Montage des Koppelmediums an der Scheibe. Dadurch ist erstmals eine Montage der Sensoreinrichtung im Fahrzeug möglich.

Gemäß einer bevorzugten Ausführungsform kann die Befestigung des Sensorelementes an der Scheibe bei Unterdruck erfolgen. Erfindungsgemäß wird die Luft aus den Vertiefungen der 3-D-Struktur entfernt und es kommt zu einer im wesentlichen vollständigen Ankopplung des Lichtleiters an die Scheibe. Vorteilhaft ist insbesondere, dass vergleichsweise geringe Drücke zur Realisierung der Blasenfreiheit erforderlich sind bzw. größere Flächen des Koppelelementes blasenfrei angeklebt werden können.

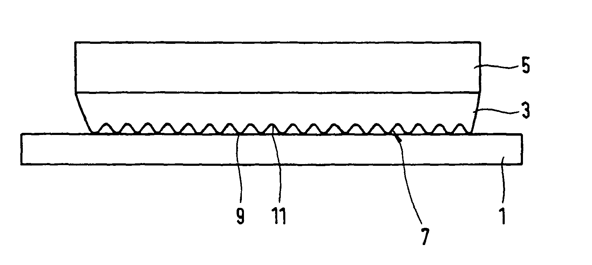

Nachfolgend sind ein Ausführungsbeispiel der erfindungsgemäßen Sensoreinrichtung und das Montageverfahren beschrieben; es zeigt die einzige Fig. stark schematisiert die montierte Sensoreinrichtung.

Auf einer Scheibe 1 ist über ein Koppelelement 3 ein Lichtleiter 5 einer nicht näher gezeigten, an sich bekannten Sensoreinrichtung mit Sender und Empfänger zur Erfassung der Benetzung einer Fahrzeugscheibe befestigt. Das Koppelelement 3 weist scheibenseitig eine regelmäßige 3-D-Oberflächenstruktur 7 mit Erhebungen 9 und Vertiefungen 11 auf. Während die Erhebungen 9 direkt an der Scheibe 1 anliegen und dadurch eine optimale optische Ankopplung des Systems gewährleisten, kann in den Vertiefungen Luft angeordnet sein.

Das Koppelmedium 3 besteht dabei aus einem beidseitig klebefähigen, flexiblen Material, z.B. einem Klebeband aus PVB. Bevorzugt ist das Material noch in geringem Umfang luftdurchlässig. Eine Seite des Klebebandes 5 ist glatt und ist auf das als Lichtleiter ausgebildete Koppelelement 3 geklebt. Die gegenüberliegende Seite besitzt die 3-D-Oberflächenstruktur, die Punkte in unterschiedlicher Höhe besitzt. Zur Herstellung wird das Klebeband-Material entweder in eine geeignete Art von Form gegossen oder es wird die 3-D-Oberflächenstruktur 7 in ebene Platten gepresst oder geschnitten. Die Struktur zeichnet sich durch ihre geometrische Regelmäßigkeit aus und kann beispielsweise als Waffelstruktur, mit konzentrischen Kreisen oder als Gitter-Rillenstruktur ausgebildet sein. Dabei weist das Klebeband Grundmaße von 3 auf 5 cm sowie eine Stärke von 2 bis 3 mm auf.

Wird bei der Montage der Lichtleiter 5 über das Band 3 an die Scheibe 1 geklebt, so haftet dieses an den höheren Punkten bzw. den Erhebungen 9 an der Scheibe und die Luft sammelt sich in den Räumen zwischen der Scheibe 1 und dem Band 3 in den Vertiefungen 11. Dadurch werden unkontrollierte Luftblasen verhindert, die das optische Erscheinungsbild der Anordnung beeinträchtigen würden. Dies ist grundsätzlich auch umgekehrt möglich, d.h. die flache Seite des Bandes 3 ist an der Scheibe 1 und die 3-D-Oberflächenstruktur 7 ist auf dem Lichtleiter 5 befestigt. Dies ist jedoch sowohl herstellungstechnisch als auch von der Qualität der Ankopplung des Lichtleiters 5 an die Scheibe 1 nachteilig. Der Lichtleiter 5 kann zusätzlich aus einem geeigneten Material bestehen und entsprechend gestaltet sein, so dass sich der Lichtleiter zusätzlich verformt und an die Kontur der Scheibe 1 anpasst.

Für die 3-D-Oberflächenstruktur 7 sind folgende Randbedingungen zu berücksichtigen: Die Erhöhungen 9 müssen flächenmäßig groß genug sein, um eine möglichst große optische Koppelfläche sowie eine ausreichende Klebefläche zu realisieren. Andererseits sollen die Erhöhungen flächenmäßig auch nicht zu groß sein, um zusätzliche Lufteinschlüsse innerhalb der Erhöhungen 9 vermeiden zu können. Das Verhältnis der Fläche der Erhöhungen 9 zur Fläche der Vertiefungen 11 ist idealer weise etwa 3:1. Vorteilhaft ist zudem, wenn dieses Flächenverhältnis über eine Fertigungsserie konstant gehalten wird. Dadurch sind auch die durch die Luftblasen auftretenden Verluste konstant gehalten und damit reproduzierbar und einfach über die gesamte Fertigungsserie kompensierbar. Die Strukturgröße, d.h. die Abmessungen der Erhöhungen und Vertiefungen kann in einer Größenordnung von cm bis um liegen, insbesondere im Bereich von 10⁻³ bis 10⁻⁵ m. Die Struktur sollte in Richtung der optischen Strecke des Sensors ausgebildet sein, d.h. die Erhöhungen sollten in Richtung der optischen Verbindungsstrecke zwischen Sender und Empfänger liegen (nicht gezeigt), um möglichst wenig zu streuen. Die Höhe der Struktur bzw. der Unterschied von Erhöhung zu Vertiefung liegt vorteilhafter weise in der Größenordnung der horizontalen Ausmaße der Struktur. Insbesondere beträgt das Verhältnis von Breite zu Höhe der Erhöhungen 9 der 3-D-Oberflächenstruktur 7 etwa 3 bis 20, vorzugsweise um 10. Wenn die 3-D-Oberflächenstruktur 7 durch einen Prozess unter Druck vollständig an die Scheibe 1 angekoppelt werden soll, muss der Höhenunterschied zwischen Erhöhungen 9 und Vertiefungen 11 möglichst klein gewählt werden, um Verspannungen in dem Koppelelement 3 zu vermeiden. Die Höhendifferenz zwischen den einzelnen Erhöhungen 9 ist stets kleiner zu wählen als die Verformung der Erhöhungen beim Aufkleben auf die Scheibe.

Bei der Montage der Sensoreinrichtung kann das Klebeband 3 zunächst in der Steuergerätefertigung blasenfrei auf den Lichtleiter 5 aufgerollt werden (evtl. unter Vakuum oder im Wasserbad). Die Montage des Lichtleiters 5 bzw. der vollständigen Sensoreinrichtung an der Windschutzscheibe 1 kann dann einfach und prozesssicher durch Aufkleben erfolgen. Optional kann diese Klebung noch unter Druck oder Unterdruck weiterbehandelt werden, wodurch die in den Vertiefungen 11 befindliche Luft zwischen dem Lichtleiter 3 und dem Glas 1 entfernt wird.

## Patentansprüche

1. Sensoreinrichtung mit einem Sensor zum optischen Erfassen von Fremdkörpern, insbesondere Regentropfen, auf einer Scheibe (1) mit einem Sensorelement, insbesondere einem Lichtleiter (5), das über ein Koppelelement (3) an eine Scheibe koppelbar ist, welches Koppelelement eine regelmäßige 3-D-Oberflächenstruktur (7) aufweist, **dadurch gekennzeichnet, dass** die 3-D-Oberflächenstruktur (7) des Koppelelementes auf einer Seite ausgebildet ist, die zur Montage mit der Koppelelementseitig glatt ausgebildeten Scheibe (1) vorgesehen ist.

2. Sensoreinrichtung nach Anspruch 1, **dadurch gekennzeichnet, dass** als das Koppelelement (3) ein beidseitig klebefähiges Band vorgesehen ist.

3. Sensoreinrichtung nach Anspruch 1 oder 2, **dadurch gekennzeichnet, dass** ein Oberflächenverhältnis von Erhöhungen (9) zu Vertiefungen (11) in der 3-D-Oberflächenstruktur des Koppelelementes etwa 3:1 beträgt.

4. Sensoreinrichtung nach einem der vorhergehenden Ansprüche, **dadurch gekennzeichnet, dass** eine Strukturgröße der 3-D-Oberflächenstruktur (7) etwa 10⁻³ bis 10⁻⁵ m beträgt.

5. Sensoreinrichtung nach einem der vorhergehenden Ansprüche, **dadurch gekennzeichnet, dass** ein Verhältnis von Breite zu Höhe der Erhöhungen (9) der 3-D-Oberflächenstruktur (7) etwa 3 bis 20, insbesondere um 10 beträgt.

6. Sensoreinrichtung nach einem der Ansprüche 1 bis 5, d**adurch gekennzeichnet, dass** in montiertem Zustand die 3-D-Oberflächenstruktur (7) an einer glatten Oberfläche einer Scheibe befestigt ist.

7. Sensoreinrichtung nach Anspruch 6, **dadurch gekennzeichnet, dass** die Scheibe (1) als Windschutzscheibe ausgebildet ist.

8. Montageverfahren für eine Sensoreinrichtung auf einer Scheibe (1) mit einem Sensorelement (5) und einem Koppelelement (3), das eine 3-D-Oberflächenstruktur (7) aufweist, **dadurch gekennzeichnet, dass** zunächst das Koppelelement (3) auf das Sensorelement (5) blasenfrei aufgebracht wird, und dass anschließend das Sensorelement über das Koppelelement (3) mit der 3-D-Oberflächenstruktur (7) an der Scheibe (1) befestigt wird.

9. Montageverfahren nach Anspruch 8, **dadurch gekennzeichnet, dass** die Befestigung des Sensorelementes (5) an der Scheibe (1) bei Unterdruck erfolgt.

## Claims

1. Sensor device having a sensor for optical detection of foreign bodies, in particular raindrops, on a pane (1) having a sensor element, in particular an optical waveguide (5), which can be coupled via a coupling element (3) to a pane, which coupling element has a regular 3D surface structure (7), **characterized in that** the 3D surface structure (7) of the coupling element is formed on a face which is intended for mounting on the plane (1), which is smooth on the coupling element side.

2. Sensor device according to Claim 1, **characterized in that** a double-sided adhesive tape is provided as the coupling element (3).

3. Sensor device according to Claim 1 or 2, **characterized in that** the surface ratio of peaks (9) to depressions (11) in the 3D surface structure of the coupling element is about 3:1.

4. Sensor device according to one of the preceding claims, **characterized in that** the structure size of the 3D surface structure (7) is approximately 10⁻³ to 10⁻⁵ m.

5. Sensor device according to one of the preceding claims, **characterized in that** the ratio of the width to the height of the peaks (9) of the 3D surface structure (7) is approximately 3 to 20, in particular around 10.

6. Sensor device according to one of Claims 1 to 5, **characterized in that**, in the mounted state, the 3D surface structure (7) is attached to a smooth surface of a pane.

7. Sensor device according to Claim 6, **characterized in that** the pane (1) is in the form of a windscreen.

8. Mounting method for a sensor device on a pane (1) having a sensor element (5) and a coupling element (3) which has a 3D surface structure (7), **characterized in that** the coupling element (3) is first of all fitted without any bevels to the sensor element (5), and **in that** the sensor element is then attached to the pane (1) via the coupling element (3) with the 3D surface structure (7).

9. Mounting method according to Claim 8, **characterized in that** the sensor element (5) is attached to the pane (1) under reduced pressure.

## Revendications

1. Dispositif de détection comportant un détecteur pour la détection optique de corps étrangers, notamment de gouttes de pluie sur une vitre (1) ayant un élément de détection, notamment un guide de lumière (5), relié par un élément de couplage (3) à une vitre, cet élément de couplage ayant une structure de surface (7) régulière en 3-D,
**caractérisé en ce que**
la structure de surface (7) en 3-D de l'élément de couplage est réalisée sur la face prévue pour être montée contre la surface lisse de la vitre du côté tourné vers l'élément de couplage.

2. Installation de détection selon la revendication 1,
**caractérisée en ce que**
l'élément de couplage (3) est un ruban adhésif biface.

3. Installation selon la revendication 1 ou 2,
**caractérisée en ce que**
le rapport de surface entre les reliefs (9) et les cavités (11) de la structure de surface en 3-D de l'élément de couplage correspond sensiblement à 3/1.

4. Installation selon l'une des revendications précédentes,
**caractérisée par**
une dimension de la structure de surface (7) en 3-D qui correspond à environ 10⁻³ jusqu'à 10⁻⁵ m.

5. Installation selon l'une des revendications précédentes,
**caractérisée en ce qu'**
un rapport entre la largeur et la hauteur des reliefs (9) de la structure de surface (7) en 3-D est compris entre 3 et 20 et il est notamment de l'ordre de 10.

6. Installation selon l'une des revendications 1 à 5,
**caractérisée en ce que**
la structure de surface (7) en 3-D est fixée à l'état monté contre une surface lisse d'une vitre.

7. Installation selon la revendication 6,
**caractérisée en ce que**
la vitre (1) est un pare-brise.

8. Procédé de montage d'une installation de détection sur une vitre (1) comprenant un élément de détection (5) ainsi qu'un élément de couplage (3) ayant une structure de surface (7) en 3-D,
**caractérisé en ce qu'**
on applique tout d'abord l'élément de couplage (3) sur l'élément de détecteur (5) sans laisser de bulles et ensuite on fixe l'élément de détection par l'intermédiaire de l'élément de couplage (3) avec la structure de surface (7) en 3-D contre la vitre (1).

9. Procédé de montage selon la revendication 8,
**caractérisé en ce que**
la fixation de l'élément de détection (5) contre la vitre (1) se fait par dépression.
